# EUROPEAN PATENT SPECIFICATION

(11) **EP 4 128 637 B1**
(45) Date of publication and mention of the grant of the patent: **25.06.2025**
(21) Application number: 21719970.2
(22) Date of filing: 30.03.2021
(51) Int. Cl.: H04L 5/00, H04B 7/04

(54) **TRANSMISSION CONFIGURATION INDICATOR STATE ASSOCIATION**
ZUSTANDSASSOZIATION EINES ÜBERTRAGUNGSKONFIGURATIONSINDIKATORS
ASSOCIATION D'ÉTAT D'INDICATEUR DE CONFIGURATION DE TRANSMISSION

(30) Priority: 31.03.2020 US 202063002827 P
(43) Date of publication of application: 08.02.2023
(73) Proprietor: Lenovo (Singapore) Pte. Ltd., New Tech Park 556741 (SG)
(72) Inventor: BHAMRI, Ankit, 63322 Rödermark (DE); JUNG, Hyejung, Northbrook, Illinois 60062 (US); NANGIA, Vijay, Woodridge, Illinois 60517 (US); ALI, Ali Ramadan, 81475 Munich (DE)
(74) Representative: Openshaw & Co.
(86) International application number: PCT/IB2021/052668
(87) International publication number: WO 2021/198933

(56) References cited:
- CMCC: "Consideration on MAC CE design for single PDCCH based multi- TRP transmission", vol. RAN WG2, no. Chongqing, China; 20191014 - 20191018, 4 October 2019 (2019-10-04), XP051804878, Retrieved from the Internet <URL:https://ftp.3gpp.org/tsg_ran/WG2_RL2/TSGR2_107bis/Docs/R2-1913171.zip R2-1913171 Consideration on MAC CE design for single PDCCH based multi-TRPpanel transmission.doc> [retrieved on 20191004]
- HUAWEI ET AL: "Enhancements on multi-TRP/panel transmission", vol. RAN WG1, no. Chongqing, China; 20191014 - 20191020, 5 October 2019 (2019-10-05), XP051808411, Retrieved from the Internet <URL:https://ftp.3gpp.org/tsg_ran/WG1_RL1/TSGR1_98b/Docs/R1-1910073.zip R1-1910073.doc> [retrieved on 20191005]
- HUAWEI ET AL: "Enhancements on Multi-TRP/panel transmission", 1 March 2019 (2019-03-01), pages 114, XP051599264, Retrieved from the Internet <URL:http://www.3gpp.org/ftp/tsg%5Fran/WG1%5FRL1/TSGR1%5F96/Docs/R1%2D1901567%2Ezip>
- CMCC: "Discussion on multi-TRP/panel transmission", vol. RAN WG1, no. Athens, Greece; 20190225 - 20190301, 16 February 2019 (2019-02-16), XP051600032, Retrieved from the Internet <URL:http://www.3gpp.org/ftp/tsg%5Fran/WG1%5FRL1/TSGR1%5F96/Docs/R1%2D1902338%2Ezip> [retrieved on 20190216]
- OPPO: "Enhancements on multi-TRP and multi-panel transmission", vol. RAN WG1, no. Prague, CZ; 20190826 - 20190830, 17 August 2019 (2019-08-17), pages 1 - 13, XP051764960, Retrieved from the Internet <URL:http://www.3gpp.org/ftp/tsg_ran/WG1_RL1/TSGR1_98/Docs/R1-1908351.zip> [retrieved on 20190817]

## Description

### CROSS-REFERENCE TO RELATED APPLICATIONS

This application claims priority to United States Patent Application Serial Number 63/002,827 entitled "APPARATUSES, METHODS, AND SYSTEMS FOR ENHANCED TCI INDICATION AND ASSOCIATION FOR MULTI-TRP TRANSMISSIONS AND REPETITIONS FOR BEYOND 52.6GHZ" and filed on March 31, 2020 for Ankit Bhamri.

### FIELD

The subject matter disclosed herein relates generally to wireless communications and more particularly relates to transmission configuration indicator state association.

### BACKGROUND

In certain wireless communications networks, multiple layers for a single transmission occasion may be transmitted using a single transmission configuration indicator state. This may reduce the efficiency and/or flexibility of the transmission occasion.

### BRIEF SUMMARY

Methods for transmission configuration indicator state association are disclosed. Apparatuses and systems also perform the functions of the methods. One embodiment of a method is defined in claim 1.

One apparatus for transmission configuration indicator state association is defined in claim 8.

CMCC, "Consideration on MAC CE design for single PDCCH based multi- TRP transmission", vol. RAN WG2, no. Chongqing, China; 20191014 - 20191018 4 October 2019 (2019-10-04) discusses the indication of TCI states via codepoints in DCI.

### BRIEF DESCRIPTION OF THE DRAWINGS

A more particular description of the embodiments briefly described above will be rendered by reference to specific embodiments that are illustrated in the appended drawings. Understanding that these drawings depict only some embodiments and are not therefore to be considered to be limiting of scope, the embodiments will be described and explained with additional specificity and detail through the use of the accompanying drawings, in which:
Figure 1 is a schematic block diagram illustrating one embodiment of a wireless communication system for transmission configuration indicator state association;
Figure 2 is a schematic block diagram illustrating one embodiment of an apparatus that may be used for transmission configuration indicator state association;
Figure 3 is a schematic block diagram illustrating one embodiment of an apparatus that may be used for transmission configuration indicator state association;
Figure 4 is a diagram illustrating one embodiment of enhanced TCI state group activation/deactivation for a UE-specific PDSCH MAC CE;
Figure 5 is a diagram illustrating one embodiment of a table indicating an applied redundancy version 1;
Figure 6 is a diagram illustrating one embodiment of a table indicating an applied redundancy version with RVSeqOffset; and
Figure 7 is a flow chart diagram illustrating one embodiment of a method for transmission configuration indicator states association to transmission occasions.

### DETAILED DESCRIPTION

As will be appreciated by one skilled in the art, aspects of the embodiments may be embodied as a system, apparatus, method, or program product. Accordingly, embodiments may take the form of an entirely hardware embodiment, an entirely software embodiment (including firmware, resident software, micro-code, etc.) or an embodiment combining software and hardware aspects that may all generally be referred to herein as a "circuit," "module" or "system." Furthermore, embodiments may take the form of a program product embodied in one or more computer readable storage devices storing machine readable code, computer readable code, and/or program code, referred hereafter as code. The storage devices may be tangible, non-transitory, and/or non-transmission. The storage devices may not embody signals. In a certain embodiment, the storage devices only employ signals for accessing code.

Certain of the functional units described in this specification may be labeled as modules, in order to more particularly emphasize their implementation independence. For example, a module may be implemented as a hardware circuit comprising custom very-large-scale integration ("VLSI") circuits or gate arrays, off-the-shelf semiconductors such as logic chips, transistors, or other discrete components. A module may also be implemented in programmable hardware devices such as field programmable gate arrays, programmable array logic, programmable logic devices or the like.

Modules may also be implemented in code and/or software for execution by various types of processors. An identified module of code may, for instance, include one or more physical or logical blocks of executable code which may, for instance, be organized as an object, procedure, or function. Nevertheless, the executables of an identified module need not be physically located together, but may include disparate instructions stored in different locations which, when joined logically together, include the module and achieve the stated purpose for the module.

Indeed, a module of code may be a single instruction, or many instructions, and may even be distributed over several different code segments, among different programs, and across several memory devices. Similarly, operational data may be identified and illustrated herein within modules, and may be embodied in any suitable form and organized within any suitable type of data structure. The operational data may be collected as a single data set, or may be distributed over different locations including over different computer readable storage devices. Where a module or portions of a module are implemented in software, the software portions are stored on one or more computer readable storage devices.

Any combination of one or more computer readable medium may be utilized. The computer readable medium may be a computer readable storage medium. The computer readable storage medium may be a storage device storing the code. The storage device may be, for example, but not limited to, an electronic, magnetic, optical, electromagnetic, infrared, holographic, micromechanical, or semiconductor system, apparatus, or device, or any suitable combination of the foregoing.

More specific examples (a non-exhaustive list) of the storage device would include the following: an electrical connection having one or more wires, a portable computer diskette, a hard disk, a random access memory ("RAM"), a read-only memory ("ROM"), an erasable programmable read-only memory ("EPROM" or Flash memory), a portable compact disc read-only memory ("CD-ROM"), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Code for carrying out operations for embodiments may be any number of lines and may be written in any combination of one or more programming languages including an object oriented programming language such as Python, Ruby, Java, Smalltalk, C++, or the like, and conventional procedural programming languages, such as the "C" programming language, or the like, and/or machine languages such as assembly languages. The code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network ("LAN") or a wide area network ("WAN"), or the connection may be made to an external computer (for example, through the Internet using an Internet Service Provider).

Reference throughout this specification to "one embodiment," "an embodiment," or similar language means that a particular feature, structure, or characteristic described in connection with the embodiment is included in at least one embodiment. Thus, appearances of the phrases "in one embodiment," "in an embodiment," and similar language throughout this specification may, but do not necessarily, all refer to the same embodiment, but mean "one or more but not all embodiments" unless expressly specified otherwise. The terms "including," "comprising," "having," and variations thereof mean "including but not limited to," unless expressly specified otherwise. An enumerated listing of items does not imply that any or all of the items are mutually exclusive, unless expressly specified otherwise. The terms "a," "an," and "the" also refer to "one or more" unless expressly specified otherwise.

Furthermore, the described features, structures, or characteristics of the embodiments may be combined in any suitable manner. In the following description, numerous specific details are provided, such as examples of programming, software modules, user selections, network transactions, database queries, database structures, hardware modules, hardware circuits, hardware chips, etc., to provide a thorough understanding of embodiments. One skilled in the relevant art will recognize, however, that embodiments may be practiced without one or more of the specific details, or with other methods, components, materials, and so forth. In other instances, well-known structures, materials, or operations are not shown or described in detail to avoid obscuring aspects of an embodiment.

Aspects of the embodiments are described below with reference to schematic flowchart diagrams and/or schematic block diagrams of methods, apparatuses, systems, and program products according to embodiments. It will be understood that each block of the schematic flowchart diagrams and/or schematic block diagrams, and combinations of blocks in the schematic flowchart diagrams and/or schematic block diagrams, can be implemented by code. The code may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the schematic flowchart diagrams and/or schematic block diagrams block or blocks.

The code may also be stored in a storage device that can direct a computer, other programmable data processing apparatus, or other devices to function in a particular manner, such that the instructions stored in the storage device produce an article of manufacture including instructions which implement the function/act specified in the schematic flowchart diagrams and/or schematic block diagrams block or blocks.

The code may also be loaded onto a computer, other programmable data processing apparatus, or other devices to cause a series of operational steps to be performed on the computer, other programmable apparatus or other devices to produce a computer implemented process such that the code which execute on the computer or other programmable apparatus provide processes for implementing the functions/acts specified in the flowchart and/or block diagram block or blocks.

The schematic flowchart diagrams and/or schematic block diagrams in the Figures illustrate the architecture, functionality, and operation of possible implementations of apparatuses, systems, methods and program products according to various embodiments. In this regard, each block in the schematic flowchart diagrams and/or schematic block diagrams may represent a module, segment, or portion of code, which includes one or more executable instructions of the code for implementing the specified logical function(s).

It should also be noted that, in some alternative implementations, the functions noted in the block may occur out of the order noted in the Figures. For example, two blocks shown in succession may, in fact, be executed substantially concurrently, or the blocks may sometimes be executed in the reverse order, depending upon the functionality involved. Other steps and methods may be conceived that are equivalent in function, logic, or effect to one or more blocks, or portions thereof, of the illustrated Figures.

Although various arrow types and line types may be employed in the flowchart and/or block diagrams, they are understood not to limit the scope of the corresponding embodiments. Indeed, some arrows or other connectors may be used to indicate only the logical flow of the depicted embodiment. For instance, an arrow may indicate a waiting or monitoring period of unspecified duration between enumerated steps of the depicted embodiment. It will also be noted that each block of the block diagrams and/or flowchart diagrams, and combinations of blocks in the block diagrams and/or flowchart diagrams, can be implemented by special purpose hardware-based systems that perform the specified functions or acts, or combinations of special purpose hardware and code.

The description of elements in each figure may refer to elements of proceeding figures. Like numbers refer to like elements in all figures, including alternate embodiments of like elements.

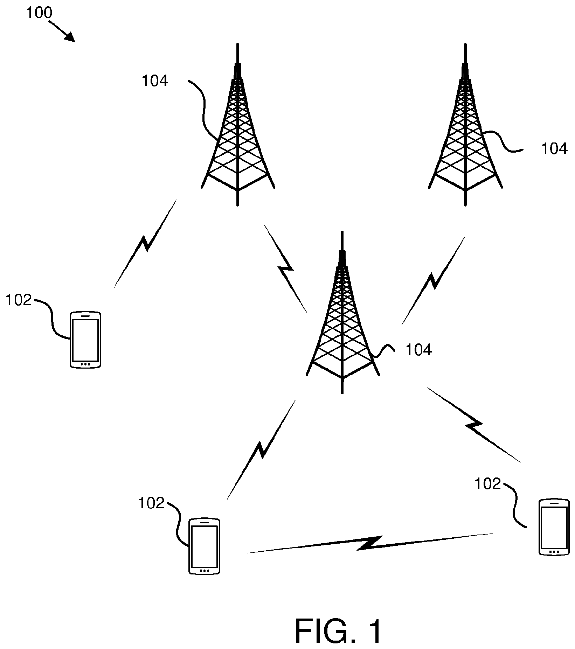

Figure 1 depicts an embodiment of a wireless communication system 100 for transmission configuration indicator state association. In one embodiment, the wireless communication system 100 includes remote units 102 and network units 104. Even though a specific number of remote units 102 and network units 104 are depicted in Figure 1, one of skill in the art will recognize that any number of remote units 102 and network units 104 may be included in the wireless communication system 100.

In one embodiment, the remote units 102 may include computing devices, such as desktop computers, laptop computers, personal digital assistants ("PDAs"), tablet computers, smart phones, smart televisions (e.g., televisions connected to the Internet), set-top boxes, game consoles, security systems (including security cameras), vehicle on-board computers, network devices (e.g., routers, switches, modems), aerial vehicles, drones, or the like. In some embodiments, the remote units 102 include wearable devices, such as smart watches, fitness bands, optical head-mounted displays, or the like. Moreover, the remote units 102 may be referred to as subscriber units, mobiles, mobile stations, users, terminals, mobile terminals, fixed terminals, subscriber stations, user equipment ("UE"), user terminals, a device, or by other terminology used in the art. The remote units 102 may communicate directly with one or more of the network units 104 via UL communication signals. In certain embodiments, the remote units 102 may communicate directly with other remote units 102 via sidelink communication.

The network units 104 may be distributed over a geographic region. In certain embodiments, a network unit 104 may also be referred to and/or may include one or more of an access point, an access terminal, a base, a base station, a Node-B, an evolved node-B ("eNB"), a 5G node-B ("gNB"), a Home Node-B, a relay node, a device, a core network, an aerial server, a radio access node, an access point ("AP"), new radio ("NR"), a network entity, an access and mobility management function ("AMF"), a unified data management ("UDM"), a unified data repository ("UDR"), a UDM/UDR, a policy control function ("PCF"), a radio access network ("RAN"), a network slice selection function ("NSSF"), an operations, administration, and management ("OAM"), a session management function ("SMF"), a user plane function ("UPF"), an application function, an authentication server function ("AUSF"), security anchor functionality ("SEAF"), trusted non-3GPP gateway function ("TNGF"), or by any other terminology used in the art. The network units 104 are generally part of a radio access network that includes one or more controllers communicably coupled to one or more corresponding network units 104. The radio access network is generally communicably coupled to one or more core networks, which may be coupled to other networks, like the Internet and public switched telephone networks, among other networks. These and other elements of radio access and core networks are not illustrated but are well known generally by those having ordinary skill in the art.

In one implementation, the wireless communication system 100 is compliant with NR protocols standardized in third generation partnership project ("3GPP"), wherein the network unit 104 transmits using an OFDM modulation scheme on the downlink ("DL") and the remote units 102 transmit on the uplink ("UL") using a single-carrier frequency division multiple access ("SC-FDMA") scheme or an orthogonal frequency division multiplexing ("OFDM") scheme. More generally, however, the wireless communication system 100 may implement some other open or proprietary communication protocol, for example, WiMAX, institute of electrical and electronics engineers ("IEEE") 802.11 variants, global system for mobile communications ("GSM"), general packet radio service ("GPRS"), universal mobile telecommunications system ("UMTS"), long term evolution ("LTE") variants, code division multiple access 2000 ("CDMA2000"), Bluetooth^{®}, ZigBee, Sigfoxx, among other protocols. The present disclosure is not intended to be limited to the implementation of any particular wireless communication system architecture or protocol.

The network units 104 may serve a number of remote units 102 within a serving area, for example, a cell or a cell sector via a wireless communication link. The network units 104 transmit DL communication signals to serve the remote units 102 in the time, frequency, and/or spatial domain.

In various embodiments, a remote unit 102 may receive, from at least one network device (e.g., network unit 104), first information indicating a first set of transmission configuration indicator states. In various embodiments, the remote unit 102 may receive, from the at least one network device, second information indicating a second set of transmission configuration indicator states. In some embodiments, the remote unit 102 may determine an association between the first set of transmission configuration indicator states and a first set of transmission occasions. In various embodiments, the remote unit 102 may determine an association between the second set of transmission configuration indicator states and a second set of transmission occasions. Accordingly, the remote unit 102 may be used for transmission configuration indicator state association.

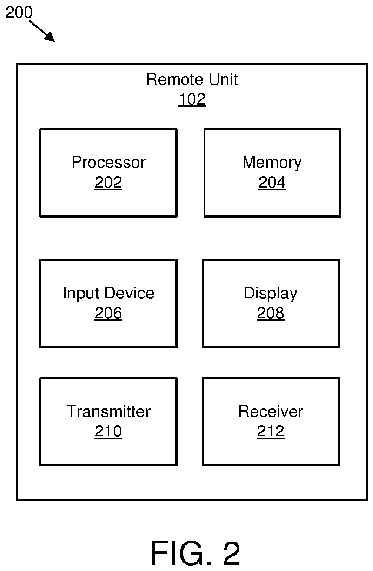

Figure 2 depicts one embodiment of an apparatus 200 that may be used for transmission configuration indicator state association. The apparatus 200 includes one embodiment of the remote unit 102. Furthermore, the remote unit 102 may include a processor 202, a memory 204, an input device 206, a display 208, a transmitter 210, and a receiver 212. In some embodiments, the input device 206 and the display 208 are combined into a single device, such as a touchscreen. In certain embodiments, the remote unit 102 may not include any input device 206 and/or display 208. In various embodiments, the remote unit 102 may include one or more of the processor 202, the memory 204, the transmitter 210, and the receiver 212, and may not include the input device 206 and/or the display 208.

The processor 202, in one embodiment, may include any known controller capable of executing computer-readable instructions and/or capable of performing logical operations. For example, the processor 202 may be a microcontroller, a microprocessor, a central processing unit ("CPU"), a graphics processing unit ("GPU"), an auxiliary processing unit, a field programmable gate array ("FPGA"), or similar programmable controller. In some embodiments, the processor 202 executes instructions stored in the memory 204 to perform the methods and routines described herein. The processor 202 is communicatively coupled to the memory 204, the input device 206, the display 208, the transmitter 210, and the receiver 212.

The memory 204, in one embodiment, is a computer readable storage medium. In some embodiments, the memory 204 includes volatile computer storage media. For example, the memory 204 may include a RAM, including dynamic RAM ("DRAM"), synchronous dynamic RAM ("SDRAM"), and/or static RAM ("SRAM"). In some embodiments, the memory 204 includes non-volatile computer storage media. For example, the memory 204 may include a hard disk drive, a flash memory, or any other suitable non-volatile computer storage device. In some embodiments, the memory 204 includes both volatile and non-volatile computer storage media. In some embodiments, the memory 204 also stores program code and related data, such as an operating system or other controller algorithms operating on the remote unit 102.

The input device 206, in one embodiment, may include any known computer input device including a touch panel, a button, a keyboard, a stylus, a microphone, or the like. In some embodiments, the input device 206 may be integrated with the display 208, for example, as a touchscreen or similar touch-sensitive display. In some embodiments, the input device 206 includes a touchscreen such that text may be input using a virtual keyboard displayed on the touchscreen and/or by handwriting on the touchscreen. In some embodiments, the input device 206 includes two or more different devices, such as a keyboard and a touch panel.

The display 208, in one embodiment, may include any known electronically controllable display or display device. The display 208 may be designed to output visual, audible, and/or haptic signals. In some embodiments, the display 208 includes an electronic display capable of outputting visual data to a user. For example, the display 208 may include, but is not limited to, a liquid crystal display ("LCD"), a light emitting diode ("LED") display, an organic light emitting diode ("OLED") display, a projector, or similar display device capable of outputting images, text, or the like to a user. As another, non-limiting, example, the display 208 may include a wearable display such as a smart watch, smart glasses, a heads-up display, or the like. Further, the display 208 may be a component of a smart phone, a personal digital assistant, a television, a table computer, a notebook (laptop) computer, a personal computer, a vehicle dashboard, or the like.

In certain embodiments, the display 208 includes one or more speakers for producing sound. For example, the display 208 may produce an audible alert or notification (e.g., a beep or chime). In some embodiments, the display 208 includes one or more haptic devices for producing vibrations, motion, or other haptic feedback. In some embodiments, all or portions of the display 208 may be integrated with the input device 206. For example, the input device 206 and display 208 may form a touchscreen or similar touch-sensitive display. In other embodiments, the display 208 may be located near the input device 206.

In certain embodiment, the receiver 212 may: receive, from at least one network device, first information indicating a first set of transmission configuration indicator states; and receive, from the at least one network device, second information indicating a second set of transmission configuration indicator states. In various embodiments, the processor 202 may: determine an association between the first set of transmission configuration indicator states and a first set of transmission occasions; and determine an association between the second set of transmission configuration indicator states and a second set of transmission occasions.

Although only one transmitter 210 and one receiver 212 are illustrated, the remote unit 102 may have any suitable number of transmitters 210 and receivers 212. The transmitter 210 and the receiver 212 may be any suitable type of transmitters and receivers. In one embodiment, the transmitter 210 and the receiver 212 may be part of a transceiver.

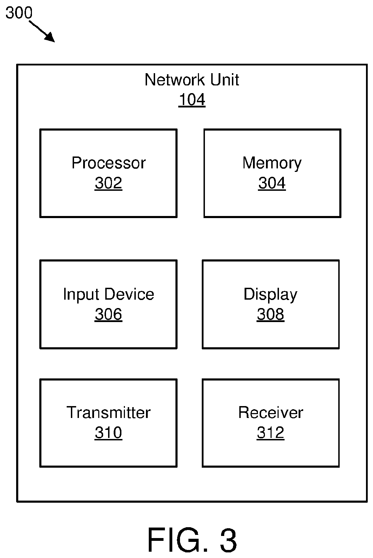

Figure 3 depicts one embodiment of an apparatus 300 that may be used for transmission configuration indicator state association. The apparatus 300 includes one embodiment of the network unit 104. Furthermore, the network unit 104 may include a processor 302, a memory 304, an input device 306, a display 308, a transmitter 310, and a receiver 312. As may be appreciated, the processor 302, the memory 304, the input device 306, the display 308, the transmitter 310, and the receiver 312 may be substantially similar to the processor 202, the memory 204, the input device 206, the display 208, the transmitter 210, and the receiver 212 of the remote unit 102, respectively.

In various embodiments, multi-TRP communications may be used for physical downlink shared channel ("PDSCH") transmission with increased reliability. In certain embodiments, only up to 2 TCI state indication may be used, and the 2 TCI states may be associated with different transmission occasions. In such embodiments, there may be limited support relating to a number of beams and/or TRPs. Further, in such embodiments, combinations of transmissions in a spatial domain, frequency domain, and/or time domain may be used.

In some embodiments, a number of beams and/or a number of TRPs at a network side and a number of panels at a UE side may be greater for frequency range 2 ("FR2") (24.25 GHz to 52.6 GHz) than for lower frequencies, and may be even greater for frequencies beyond FR2.

Described herein are various enhancements to beam management for frequencies beyond 52.6 GHz, but also applicable to FR2 below 52.6 GHz. In certain embodiments, TCI signaling framework may be enhanced for supporting a higher degree of beamforming from multiple TRPs across transmission occasions in different domains (e.g., FDM, spatial division multiplexing ("SDM"), and time division multiplexing ("TDM")).

In various embodiments, a set of layers (e.g., up to 2) for a single transmission occasion may only be transmitted using a single TCI state from demodulation reference signal ("DMRS") ports within a single CDM group. In some embodiments, such as for beyond 52.6 GHz, more than 2 TCI states may be used.

In certain embodiments, TCI signaling may enable implicit or explicit grouping of TCI states and TCI groups (and states within a group) may be associated with transmission occasions from single and/or multiple TRPs using combinations of spatial domain, frequency domain, and/or time domain multiplexing.

Various embodiments described herein enable flexible combinations of multi-beam transmissions from single and/or multiple TRPs with a higher degree of spatial relations compared to other configurations (e.g., for use in NR).

In some embodiments, multiple TCI state groups ("TSGs") may be configured for a UE by a network entity (e.g., gNB) via transmission to the UE. In such embodiments, a TCI state group ("TSG") may include up to 'N' TCI states. Moreover, the gNB may configure multiple DL TX beam combinations (e.g., TSGs) based on the UE's CSI reporting and/or the gNB's knowledge about DL TX beam patterns and TRP deployment. The gNB may dynamically indicate up to 'M' TSGs via a TCI codepoint of a TCI field in DCI. Further, the TCI codepoint may map to one or more TSGs (e.g., up to 'M' TSGs).

In certain embodiments, a gNB semi-statically configures a set of TSGs and a MAC control element ("CE") is used to activate a subset of the set of TSGs by combining one or more TSGs for each index of a TCI codepoint from a semi-static configuration. DCI may signal one index of the TCI codepoint.

In various embodiments, a TSG may have a single TCI state, and a number of TCI states in each configured TSG may be different. In such embodiments, a UE may receive multiple DMRS antenna port indications (e.g., up to 'N' indications) in DCI. Each DMRS antenna port indication of the multiple DMRS antenna port indications may be applicable to one or more TSGs with a particular number of TCI states. For example, two DMRS antenna port indications (e.g., one for TSGs with a single TCI state and another for TSGs with two TCI states) may be signaled in DCI by a gNB.

In some embodiments, TCI states within a TSG may correspond to spatial beams for different TRPs. In certain embodiments, TCI states within a TSG j may correspond to spatial beams associated with TRP j.

In certain embodiments, an enhanced TCI state group activation and/or deactivation for UE-specific PDSCH MAC CE may be identified by a MAC protocol data unit ("PDU") subheader with a logical channel identifier ("LCID"). The MAC CE may have a variable size including the following fields: 1) Serving Cell ID: this field indicates the identity of the serving cell for which the MAC CE applies - the length of this field is 5 bits; 2) bandwidth part ("BWP") ID: this field indicates a DL BWP for which the MAC CE applies as the codepoint of the DCI bandwidth part indicator field - the length of the BWP ID field is 2 bits; 3) Ci,j: this field indicates whether an octet containing TCI state group IDi,j+1 is present - if this field is set to "1", the octet containing TCI state group IDi,j+1 is present - if this field is set to "0", the octet containing TCI state group IDi,j+1 is not present; 4) TCI state group IDi,j: this field indicates the TCI state group identified by TCI-StateGroupld, where i is the index of the codepoint of the DCI transmission configuration indication field and TCI state group IDi,j denotes the jth TCI state group indicated for the ith codepoint in the DCI transmission configuration indication field - the TCI codepoint to which the TCI state groups are mapped is determined by its ordinal position among all the TCI codepoints with sets of TCI state group IDi,j fields, i.e. the first TCI codepoint with TCI state group ID0,1, ..., TCI state group ID0,J(0) shall be mapped to the codepoint value 0, the second TCI codepoint with TCI state group ID1,1, ..., TCI state ID1,J(1) shall be mapped to the codepoint value 1 and so on, where J(i) denotes the number of TCI state groups for the ith codepoint in the DCI transmission configuration indication field - the TCI state group IDi,2, ... , TCI state group IDi,J(i) are optional based on the indication of the Ci,1, ..., Ci,J(i)-1 field - the maximum number of activated TCI codepoint is 8 and the maximum number of TCI state groups mapped to a TCI codepoint is Jmax, where Jmax is configured by radio resource control ("RRC") or predefined; and 5) R: reserved bit, set to "0".

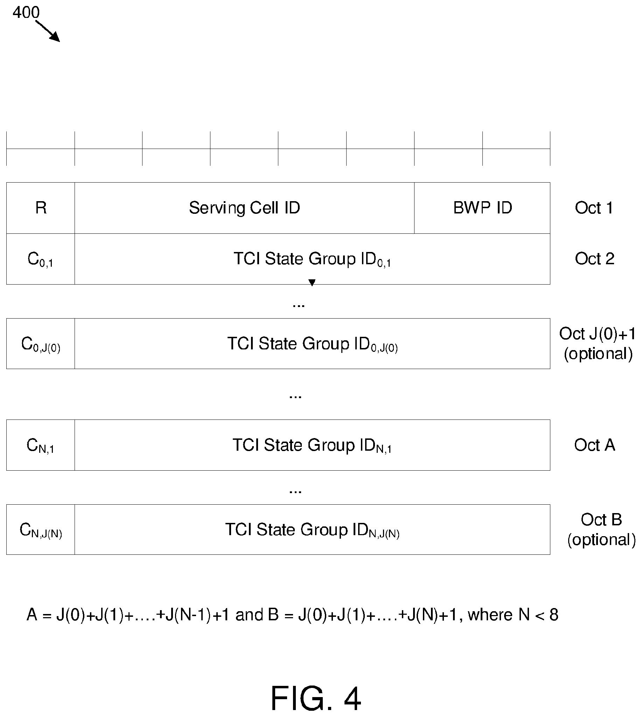

Figure 4 is a diagram 400 illustrating one embodiment of the enhanced TCI state group activation/deactivation for a UE-specific PDSCH MAC CE.

In various embodiments, up to 'N' TCI states may be signaled by a gNB to a UE by a single index of a TCI codepoint in DCI and 'M-1' consecutive indices next to the signaled index of the activated TCI table may be implied as assigned and/or indicated to the UE. In such embodiments, if index n is signaled to the UE via the TCI codepoint in DCI, then indices n+1, n+2..., n+M-1 may be implied as indicated to the UE (e.g., TCI states corresponding to TCI codepoints n, n+1, n+2..., n+M-1 may be indicated to the UE, or if TCI state j indicated via the TCI codepoint in DCI - TCI states j+1, j+2, ...j+M-1 may be implicitly indicated to the UE).

In some embodiments, a value of M may be explicitly configured or indicated by a gNB to a UE such that an n+M-1 index is less than or equal to a highest index of a TCI table. In certain embodiments, a value of M may be inferred from a number of transmission occasions that is separately configured or indicated by a gNB to a UE. In various embodiments, a value of M (e.g., Mi) may be configured for each TCI codepoint i.

In certain embodiments, up to 'N' TCI states may be signaled by a gNB to a UE by a single index of a TCI codepoint in DCI and 'M-1' consecutive indices next to the signaled index of the activated TCI table may be implied as assigned and/or indicated to the UE. In such embodiments, if index n is signaled to the UE via the TCI codepoint in DCI, then indices n-1, n-2..., n-M+1>=0 may be implied as indicated to the UE (e.g., TCI states corresponding to TCI codepoints n, n-1, n-2..., n-M+1 may be indicated to the UE, or if TCI state j indicated via the TCI codepoint in DCI - TCI states j-1, j-2, ...j-M+1 may be implicitly indicated to the UE).

In various embodiments, a value of M may be explicitly configured or indicated by a gNB to a UE and index n may be signaled such that an n-M+1 index is greater than or equal to a lowest index (e.g., 0) of a TCI table. In some embodiments, a value of M may be inferred from a number of transmission occasions that are separately configured or indicated by a gNB to a UE. In certain embodiments, if an index n is indicated to a UE, then all indices from 0 to n may be implied as indicated to the UE.

In some embodiments, up to 'N' TCI states may be signaled by a gNB to a UE by a single index of a TCI codepoint in DCI and these 'N' TCI states may be grouped such that each group includes 'K' TCI states, where 'K' is equal to a number of DM-RS code division multiplexing ("CDM") groups signaled by an antenna port field.

In some embodiments, up to 'N' TCI states may be signaled by a gNB to a UE by a single index of a TCI codepoint in DCI and these 'N' TCI states may be grouped into 'M' groups such that each group may include different number of TCI states.

In certain embodiments, a UE may be configured with multiple TCI states for a TCI codepoint i in a TCI table - TCI state IDi,j denotes the jth TCI state indicated for the ith codepoint. In one example, for an ith codepoint, M TSG may be formed such that TSG IDi,m m=0...M-1 includes TCI states with TCI state IDk,j k=(i+m) mod N and for all j, N=number of codepoints in the TCI table, (e.g., TCI states corresponding to codepoint k form TSG with TSG IDi,m). In another example, for the ith codepoint, M TSG may be formed such that TSG IDi,m m=0...M-1 includes TCI states with TCI state IDk,j k=(i-m) mod N and for all j. In a further example, for a kth codepoint, M TSG may be formed such that TSG IDi,m m=0...M-1 includes TCI states with TCI state IDk,j k=(i+m - floor(M/2)) mod N and for all j.

In various embodiments, if a UE is configured by a higher layer parameter PDSCH-config that indicates at least one entry in pdsch-TimeDomainAllocationList containing RepNumR16 in PDSCH-TimeDomainResourceAllocation, the UE may expect to be explicitly or implicitly indicated with 'M <= RepNumR16' TSGs together with the DCI field "Time domain resource assignment' indicating an entry in pdsch-TimeDomainAllocationList which contain RepNum16 in PDSCH-TimeDomainResourceAllocation and DM-RS port(s) within 'N' CDM groups in the DCI field "Antenna Port(s)", where 'N' is equal to the number of TCI states within a TSG. In one example, 'N' is equal to a maximum number of TCI states within a TSG among the 'M' TSGs.

If 'M= RepNumR16' TSGs and 'N>1' DM-RS CDM groups (e.g., TCI states within each TSG) are indicated to the UE, the UE may expect to receive the same transport block ("TB") with 'N' transmission occasions within one slot and 'N x M' transmissions occasions across 'M' slots. Each TSG may be associated to each slot in a sequential manner and each of the N TCI states within a TSG may be associated to transmission occasions within a slot in a sequential manner. For a slot 'k' (e.g., k=m), the UE may expect to receive 'N' transmissions occasions (e.g., of the same TB) on the same time-frequency resources within a slot, but on different receive beams and/or panels that are transmitted by N different beams (e.g., associated with TCI states within TSG 'm') of the same TRP or from different TRPs. Similarly, for the next slot 'k+1' (e.g., k=m), the UE may expect to receive another N transmission occasions (e.g., of the same TB) on the same time-frequency resources within that slot, but on different receive beams and/or panels that are transmitted by 'N' different beams (e.g., associated with TCI states within TSG 'm+1') of the same TRP or from different TRPs. This transmission scheme may continue until 'k+M-1' slots.

If 'M < RepNumR16' TSGs and 'N>1' DM-RS CDM groups (e.g., TCI states within each TSG) are indicated to the UE, the UE may expect to receive a same TB with 'N' transmission occasions within one slot and 'N x RepNumR16' transmissions occasions across 'RepNumR16' slots. Each TSG may be associated to each slot in a sequential manner (e.g., TSG #1#1#2#2 are associated to 4 slots with RepNumR16 = 4 and M = 2) and each of the N TCI states within a TSG may be associated with transmission occasions within a slot in a sequential manner. 'M' TSGs may be associated with slots in a cyclic manner (e.g., with modulo-M wrap-around, slot 'k' associated with TSG k mod M, TSG #1#2#1#2 are associated to 4 slots with RepNumR16 = 4 and M = 2) or some other configured and/or indicated pattern.

If a number of TCI states (e.g., L) within a TSG for a slot is less than N, the TCI states of the TSG associated with the N transmission occasions with the slot may be determined in a sequential manner (e.g., TCI state #1#1#2#2 are associated to N=4 transmission occasions with L=2), a cyclic manner (e.g., with modulo- L wrap-around, transmission occasion 't' associated with TCI state t mod L, TCI state #1#2#1#2 are associated to N=4 transmission occasions with L=2), or some other configured and/or indicated pattern.

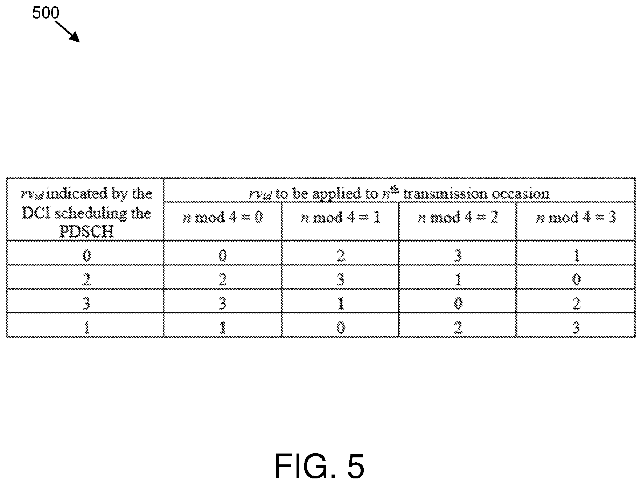

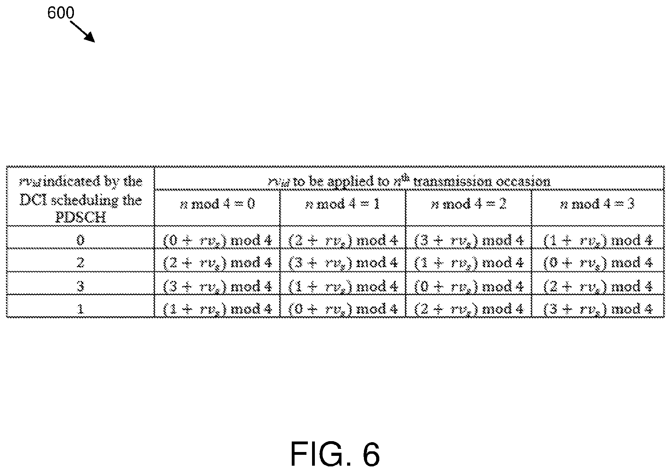

For the 'N' transmission occasions within a slot, a redundancy version to be applied may be derived according to an indicated RV sequence redundancy version identifier ("RVID") in DCI (e.g., as shown in Figure 5), where *n* = 0, 1,..(N-1) mod 4 are applied to the first transmission occasion, the second transmission occasion, and so on to the Nth transmission occasion within the slot. An RV sequence offset to the indicated RV sequence may be applied to determine the RV sequence for transmission occasions associated with different slots e.g., for slot 'k' (k=0,1, ... RepNumR16-1), RV sequence offset *rvₛ* = *k * RVSeqOffset* and Figure 6 may be used to determine the RV sequence for transmission occasions in slot 'k' where RVSeqOffset is configured by higher layers. Figure 5 is a diagram illustrating one embodiment of a table 500 indicating an applied redundancy version 1. Figure 6 is a diagram illustrating one embodiment of a table 600 indicating an applied redundancy version with RVSeqOffset.

In some embodiments, 'N' TCI states within a TSG may correspond to a single transmission occasion within a slot, but with 'N' layer transmission from 'N' different beams of the same or different TRPs. The redundancy version to be applied to the transmission occasion in slot 'n' may be derived according to an indicated RV sequence RVID in DCI and Figure 5.

In certain embodiments, if a UE is configured by higher layer parameter RepSchemeEnabler set to 'FDMSchemeA' or 'FDMSchemeB' and the UE is configured by the higher layer parameter PDSCH-config that indicates at least one entry in pdsch-TimeDomainAllocationList containing RepNumR16 in PDSCH-TimeDomainResourceAllocation, the UE may expect to be explicitly or implicitly indicated with 'M <= RepNumR16' TSGs together with the DCI field "Time domain resource assignment' indicating an entry in pdsch-TimeDomainAllocationList which contains RepNum16 in PDSCH-TimeDomainResourceAllocation and DM-RS ports within 'N' CDM groups in the DCI field "Antenna Port(s)", where 'N' is equal to a number of TCI states within a TSG. In one example, 'N' is equal to a maximum number of TCI states within a TSG among the 'M' TSGs.

If 'M= RepNumR16' TSGs and 'N>1' DM-RS CDM groups (e.g., TCI states within each TSG) are indicated to the UE, the UE may expect to receive a same TB with 'N' transmission occasions within one slot (e.g., with 'FDMSchemeB') and 'N x M' transmission occasions across 'M' slots. Each TSG may be associated to each slot in a sequential manner and each of the N TCI states within a TSG may be associated to transmission occasions within a slot in a sequential manner. For a slot 'k' (e.g., k=m), the UE may expect to receive 'N' transmissions occasions (e.g., the same TB) on non-overlapping frequency domain resources on different receive beams and/or panels that are transmitted by N different beams (e.g., associated with TCI states within TSG 'm') of the same TRP or from different TRPs. Similarly, for the next slot 'k+1' (e.g., k=m), the UE may expect to receive another N transmission occasions (e.g., the same TB) on non-overlapping frequency domain resources on different receive beams and/or panels that are transmitted by 'N' different beams (e.g., associated with TCI states within TSG 'm+1') of the same TRP or from different TRPs. This transmission scheme may continue until 'k+M-1' slots.

If 'M < RepNumR16' TSGs and 'N>1' DM-RS CDM groups (e.g., TCI states within each TSG) are indicated to the UE, the UE may expect to receive the same TB with 'N' transmission occasions within one slot and 'N x RepNumR16' transmission occasions across 'RepNumR16' slots. Each TSG may be associated with each slot in a sequential manner and each of the N TCI states within a TSG may be associated with transmission occasions within a slot in a sequential manner. 'M' TSGs may be associated with slots in a cyclic manner or some other configured and/or indicated pattern.

If the number of TCI states (e.g., L) within a TSG for a slot is less than N, the TCI states of the TSG associated with the N transmission occasions with the slot may be determined in a sequential manner (e.g., TCI state #1#1#2#2 are associated to N=4 transmission occasions with L=2), a cyclic manner (e.g., with modulo- L wrap-around, transmission occasion 't' associated with TCI state t mod L, TCI state #1#2#1#2 are associated to N=4 transmission occasions with L =2), or some other configured and/or indicated pattern.

For 'N' transmission occasions within a slot, the redundancy version to be applied is derived according to an indicated RV sequence RVID in DCI (e.g., Figure 5), where *n* = 0, 1,..(N-1) mod 4 are applied to the first transmission occasion, the second transmission occasion, and so on to the Nth transmission occasion within the slot. An RV sequence offset to the indicated RV sequence may be applied to determine the RV sequence for transmission occasions associated with different slots (e.g., for slot 'k' (k=0,1, ... RepNumR16-1), RV sequence offset *rvₛ* = *k* * *RVSeqOffset* and Figure 6 is used to determine the RV sequence for transmission occasions in slot 'k' where RVSeqOffset is configured by higher layers).

In certain embodiments, 'N' TCI states within a TSG may correspond to a single transmission occasion (e.g., with 'FDMSchemeA') within a slot, but with 'N' non-overlapping frequency domain resources associated with TCI states within TSG 'm', with the 'N' non-overlapping frequency domain resources received on different receive beams and/or panels and transmitted by N different beams of the same TRP or from different TRPs. The redundancy version to be applied to the transmission occasion in slot 'n' may be derived according to an indicated RV sequence RVID in DCI and Figure 5.

In some embodiments, if a UE is configured by higher layer parameter RepSchemeEnabler set to 'TDMSchemeA' and the UE is configured by the higher layer parameter PDSCH-config that indicates at least one entry in pdsch-TimeDomainAllocationList containing RepNumR16 in PDSCH-TimeDomainResourceAllocation, the UE may expect to be explicitly or implicitly indicated with 'M <= RepNumR16' TSGs together with the DCI field "Time domain resource assignment' indicating an entry in pdsch-TimeDomainAllocationList which contain RepNum16 in PDSCH-TimeDomainResourceAllocation and DM-RS port(s) within 'N' CDM groups in the DCI field "Antenna Port(s)", where 'N' is equal to a number of TCI states within a TSG. In one example, 'N' is equal to a maximum number of TCI states within a TSG among the 'M' TSGs.

If 'M= RepNumR16' TSGs and 'N>1' DM-RS CDM groups (e.g., TCI states within each TSG) are indicated to the UE, the UE may expect to receive the same TB with 'N' transmission occasions within one slot and 'N x M' transmissions occasions across 'M' slots. Each TSG may be associated with each slot in a sequential manner and each of the N TCI states within a TSG may be associated with transmission occasions within a slot in a sequential manner. For a slot 'k' (e.g., k=m), the UE may expect to receive 'N' transmissions occasions (e.g., the same TB) on non-overlapping time domain resources on different receive beams and/or panels that are transmitted by N different beams (e.g., associated with TCI states within TSG 'm') of the same transmission and reception point ("TRP") or from different TRPs. Similarly, for the next slot 'k+1', the UE may expect to receive another N transmission occasions (e.g., the same TB) on non-overlapping time domain resources on different receive beams and/or panels that are transmitted by 'N' different beams (e.g., associated with TCI states within TSG 'm+1') of the same TRP or from different TRPs. This transmission scheme continues till 'k+M-1' slots.

If 'M < RepNumR16' TSGs and 'N>1' DM-RS CDM groups (e.g., TCI states within each TSG) are indicated to the UE, the UE may expect to receive the same TB with 'N' transmission occasions within one slot and 'N x RepNumR16' transmission occasions across 'RepNumR16' slots. Each TSG may be associated with each slot in a sequential manner and each of the N TCI states within a TSG may be associated with transmission occasions within a slot in a sequential manner. 'M' TSGs may be associated with slots in a cyclic manner or some other configured and/or indicated pattern.

If the number of TCI states (e.g., L) within a TSG for a slot is less than N, the TCI states of the TSG associated with the N transmission occasions with the slot may be determined in a sequential manner (e.g., TCI state #1#1#2#2 are associated to N=4 transmission occasions with L=2), a cyclic manner (e.g., with modulo- L wrap-around, transmission occasion 't' associated with TCI state t mod L, TCI state #1#2#1#2 are associated to N=4 transmission occasions with L=2), or some other configured and/or indicated pattern.

For the 'N' transmission occasions within a slot, the redundancy version to be applied may be derived according to a indicated RV sequence RVID in DCI (e.g., Figure 5), where *n* = 0, 1,..(N-1) mod 4 are applied to the first transmission occasion, the second transmission occasion, and so on to the Nth transmission occasion within the slot. An RV sequence offset to the indicated RV sequence may be applied to determine the RV sequence for transmission occasions associated with different slots (for slot 'k' k=0,1, ... RepNumR 16-1), RV sequence offset *rvₛ* = *k* * *RVSeqOffset* and Figure 6 may be used to determine the RV sequence for transmission occasions in slot 'k' where RVSeqOffset is configured by higher layers.

In various embodiments, N transmission occasions within a slot, instead of being associated with N TCI states of a TSG, may be associated with one TCI state from N TSGs (e.g., the N=2 transmission occasions in a first slot may be associated with a lowest index TCI state from a first TSG and a lowest index TCI state from a second TSG, and the N=2 transmission occasions in a second slot may be associated with a next lowest index (e.g., lowest index+1) TCI state from the first TSG and a next lowest index TCI state from the second TSG). In one example, 'N' is equal to the number of TSGs. Sequential or cyclic mapping may be used if a number of TCI states within a TSG is less than the number of slots.

Embodiments described herein may be applicable to downlink transmission (e.g., PDSCH from a network node to a UE), for uplink transmission (e.g., physical uplink shared channel ("PUSCH") from a UE to a network node) or sidelink transmission (e.g., physical sidelink shared channel ("PSSCH") from a first UE to a second UE). For transmissions from a UE, the TCI states may correspond to uplink and/or sidelink TCI states or spatial relations. The UE may be capable of simultaneous transmission associated with multiple TCI states using one or more RF chains, antenna arrays, antenna subarrays, and/or antenna panels.

In some embodiments, first set of TCI states are associated with first set of transmission occasions. In such embodiments, the first set of transmission occasions are downlink transmissions and the second set of TCI states are associated with second set of transmission occasions. Moreover, the second set of transmission occasions are uplink transmissions.

In some embodiments, the first set of TCI states associated with downlink transmissions and the second TCI states associated with uplink transmissions are indicated by a single TCI codepoint.

In some embodiments, the first set of TCI states associated with downlink transmissions and the second TCI states associated with uplink transmissions are indicated by a two separate TCI codepoints.

In some embodiments, an antenna port may be defined such that a channel over which a symbol on the antenna port is conveyed may be inferred from the channel over which another symbol on the same antenna port is conveyed.

In certain embodiments, two antenna ports are said to be quasi co-located ("QCL") if large-scale properties of a channel over which a symbol on one antenna port is conveyed may be inferred from the channel over which a symbol on another antenna port is conveyed. Large-scale properties may include one or more of delay spread, Doppler spread, Doppler shift, average gain, average delay, and/or spatial receive ("RX") parameters. Two antenna ports may be quasi co-located with respect to a subset of the large-scale properties and different subset of large-scale properties may be indicated by a QCL Type. For example, a qcl-Type may take one of the following values: 1) 'QCL-TypeA': {Doppler shift, Doppler spread, average delay, delay spread}; 2) 'QCL-TypeB': {Doppler shift, Doppler spread}; 3) 'QCL-TypeC': {Doppler shift, average delay}; and 4) 'QCL-TypeD': {Spatial Rx parameter}.

In various embodiments, spatial RX parameters may include one or more of: angle of arrival ("AoA"), dominant AoA, average AoA, angular spread, power angular spectrum ("PAS") of AoA, average angle of departure ("AoD"), PAS of AoD, transmit and/or receive channel correlation, transmit and/or receive beamforming, and/or spatial channel correlation.

In some embodiments, an "antenna port" may be a logical port that may correspond to a beam (e.g., resulting from beamforming) or may correspond to a physical antenna on a device. In certain embodiments, a physical antenna may map directly to a single antenna port in which an antenna port corresponds to an actual physical antenna. In various embodiments, a set of physical antennas, a subset of physical antennas, an antenna set, an antenna array, or an antenna sub-array may be mapped to one or more antenna ports after applying complex weights and/or a cyclic delay to the signal on each physical antenna. The physical antenna set may have antennas from a single module or panel or from multiple modules or panels. The weights may be fixed as in an antenna virtualization scheme, such as cyclic delay diversity ("CDD"). A procedure used to derive antenna ports from physical antennas may be specific to a device implementation and transparent to other devices.

In some embodiments, a UE antenna panel may be a physical or logical antenna array including a set of antenna elements or antenna ports that share a common or a significant portion of a radio frequency ("RF") chain (e.g., in-phase and/or quadrature ("I/Q") modulator, analog to digital ("A/D") converter, local oscillator, phase shift network). The UE antenna panel or UE panel may be a logical entity with physical UE antennas mapped to the logical entity. The mapping of physical UE antennas to the logical entity may be up to UE implementation. Communicating (e.g., receiving or transmitting) on at least a subset of antenna elements or antenna ports active for radiating energy (e.g., active elements) of an antenna panel may require biasing or powering on of an RF chain which results in current drain or power consumption in a UE associated with the antenna panel (e.g., including power amplifier and/or low noise amplifier ("LNA") power consumption associated with the antenna elements or antenna ports). The phrase "active for radiating energy," as used herein, is not meant to be limited to a transmit function but also encompasses a receive function. Accordingly, an antenna element that is active for radiating energy may be coupled to a transmitter to transmit radio frequency energy or to a receiver to receive radio frequency energy, either simultaneously or sequentially, or may be coupled to a transceiver in general, for performing its intended functionality. Communicating on the active elements of an antenna panel enables generation of radiation patterns or beams.

In certain embodiments, depending on a UE's own implementation, a "UE panel" may have at least one of the following functionalities as an operational role of unit of antenna group to control its transmit ("TX") beam independently, unit of antenna group to control its transmission power independently, and/pr unit of antenna group to control its transmission timing independently. The "UE panel" may be transparent to a gNB. For certain conditions, a gNB or network may assume that a mapping between a UE's physical antennas to the logical entity "UE panel" may not be changed. For example, a condition may include until the next update or report from UE or include a duration of time over which the gNB assumes there will be no change to mapping. A UE may report its UE capability with respect to the "UE panel" to the gNB or network. The UE capability may include at least the number of "UE panels." In one embodiment, a UE may support UL transmission from one beam within a panel. With multiple panels, more than one beam (e.g., one beam per panel) may be used for UL transmission. In another embodiment, more than one beam per panel may be supported and/or used for UL transmission.

In various embodiments, a transmission configuration indicator ("TCI") state associated with a target transmission may indicate a quasi-collocation relationship between a target transmission (e.g., target RS of demodulation reference signal ("DM-RS") ports of the target transmission during a transmission occasion) and source reference signals (e.g., synchronization signal block ("SSB"), channel state information reference signal ("CSI-RS"), and/or sounding reference signal ("SRS")) with respect to quasi co-location type parameters indicated in a corresponding TCI state. A UE may receive a configuration of multiple transmission configuration indicator states for a serving cell for transmissions on the serving cell.

In some embodiments, spatial relation information associated with a target transmission may indicate a spatial setting between a target transmission and a reference RS (e.g., SSB, CSI-RS, and/or SRS). For example, a UE may transmit a target transmission with the same spatial domain filter used for receiving a reference RS (e.g., DL RS such as SSB and/or CSI-RS). In another example, a UE may transmit a target transmission with the same spatial domain transmission filter used for the transmission of a RS (e.g., UL RS such as SRS). A UE may receive a configuration of multiple spatial relation information configurations for a serving cell for transmissions on a serving cell.

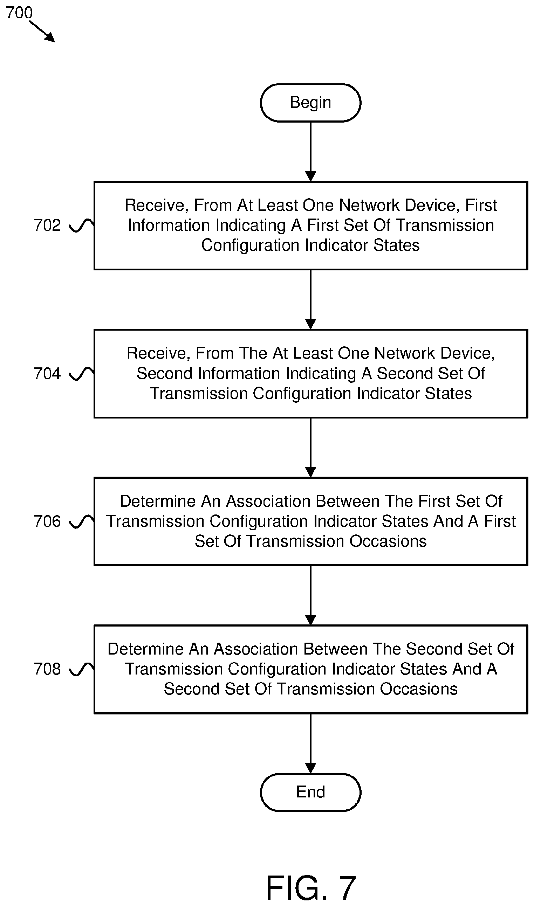

Figure 7 is a flow chart diagram illustrating one embodiment of a method 700 for transmission configuration indicator states association to transmission occasions. In some embodiments, the method 700 is performed by an apparatus, such as the remote unit 102. In certain embodiments, the method 700 may be performed by a processor executing program code, for example, a microcontroller, a microprocessor, a CPU, a GPU, an auxiliary processing unit, a FPGA, or the like.

In various embodiments, the method 700 includes receiving 702, from at least one network device, first information indicating a first set of transmission configuration indicator states. In various embodiments, the method 700 includes receiving 704, from the at least one network device, second information indicating a second set of transmission configuration indicator states. In some embodiments, the method 700 includes determining 706 an association between the first set of transmission configuration indicator states and a first set of transmission occasions. In various embodiments, the method 700 includes determining 708 an association between the second set of transmission configuration indicator states and a second set of transmission occasions.

In various embodiments, the first set of transmission configuration indicator states comprises a downlink transmission configuration indicator, the second set of transmission configuration indicator states comprises an uplink transmission configuration indicator, the first set of transmission occasions is associated with downlink reception, the second set of transmission occasions is associated with uplink transmission, the first set of transmission configuration indicator states and the second set of transmission configuration indicator states are indicated by a codepoint in downlink control information, the first set of transmission configuration indicator states contains N transmission configuration indicator states and the second set of transmission configuration indicator states contain the M transmission configuration indicator states indicated by a single transmission configuration indicator codepoint.

In some embodiments, the first set of transmission configuration indicator states is associated with a first transmission and reception point and the second set of transmission configuration indicator states is associated with a second transmission and reception point. In certain embodiments, the first set of transmission configuration indicator states and the second set of transmission configuration indicator states are indicated by a codepoint in downlink control information, and a number of transmission configuration indicator states is variable across a plurality of sets of transmission configuration indicator states.

According to the invention, the first set of transmission configuration indicator states and the second set of transmission configuration indicator states are indicated by a codepoint in downlink control information, the codepoint points to an index of an activated transmission configuration indicator table with at least one transmission configuration indicator state, and a plurality of consecutive neighboring indices of the index are implied as being indicated. In various embodiments, a number of the plurality of consecutive neighboring indices is explicitly indicated or configured in an increasing order of indexing with respect to the index or a decreasing order of indexing with respect to the index.

In some embodiments, a number of the plurality of consecutive neighboring indices is implied as a remaining number of indices above the index or a remaining number of indices below the index. In certain embodiments, multiple transmission configuration indicator states within a transmission configuration indicator set indicated by a transmission configuration indicator codepoint in downlink control information are associated with a single demodulation reference signal port. In one embodiment, transmission occasions within a slot are in a spatial domain, a frequency domain, a time domain, or some combination thereof.

In one embodiment, a method comprises: receiving, from at least one network device, first information indicating a first set of transmission configuration indicator states; receiving, from the at least one network device, second information indicating a second set of transmission configuration indicator states; determining an association between the first set of transmission configuration indicator states and a first set of transmission occasions; and determining an association between the second set of transmission configuration indicator states and a second set of transmission occasions.

In various embodiments, the first set of transmission configuration indicator states comprises a downlink transmission configuration indicator, the second set of transmission configuration indicator states comprises an uplink transmission configuration indicator, the first set of transmission occasions is associated with downlink reception, the second set of transmission occasions is associated with uplink transmission, the first set of transmission configuration indicator states and the second set of transmission configuration indicator states are indicated by a codepoint in downlink control information, the first set of transmission configuration indicator states contains N transmission configuration indicator states and the second set of transmission configuration indicator states contain the M transmission configuration indicator states indicated by a single transmission configuration indicator codepoint.

In some embodiments, the first set of transmission configuration indicator states is associated with a first transmission and reception point and the second set of transmission configuration indicator states is associated with a second transmission and reception point.

In certain embodiments, the first set of transmission configuration indicator states and the second set of transmission configuration indicator states are indicated by a codepoint in downlink control information, and a number of transmission configuration indicator states is variable across a plurality of sets of transmission configuration indicator states.

According to the invention, the first set of transmission configuration indicator states and the second set of transmission configuration indicator states are indicated by a codepoint in downlink control information, the codepoint points to an index of an activated transmission configuration indicator table with at least one transmission configuration indicator state, and a plurality of consecutive neighboring indices of the index are implied as being indicated.

In various embodiments, a number of the plurality of consecutive neighboring indices is explicitly indicated or configured in an increasing order of indexing with respect to the index or a decreasing order of indexing with respect to the index.

In some embodiments, a number of the plurality of consecutive neighboring indices is implied as a remaining number of indices above the index or a remaining number of indices below the index.

In certain embodiments, multiple transmission configuration indicator states within a transmission configuration indicator set indicated by a transmission configuration indicator codepoint in downlink control information are associated with a single demodulation reference signal port.

In one embodiment, transmission occasions within a slot are in a spatial domain, a frequency domain, a time domain, or some combination thereof.

In one embodiment, an apparatus comprises: a receiver that: receives, from at least one network device, first information indicating a first set of transmission configuration indicator states; and receives, from the at least one network device, second information indicating a second set of transmission configuration indicator states; and a processor that: determines an association between the first set of transmission configuration indicator states and a first set of transmission occasions; and determines an association between the second set of transmission configuration indicator states and a second set of transmission occasions.

In various embodiments, the first set of transmission configuration indicator states comprises a downlink transmission configuration indicator, the second set of transmission configuration indicator states comprises an uplink transmission configuration indicator, the first set of transmission occasions is associated with downlink reception, the second set of transmission occasions is associated with uplink transmission, the first set of transmission configuration indicator states and the second set of transmission configuration indicator states are indicated by a codepoint in downlink control information, the first set of transmission configuration indicator states contains N transmission configuration indicator states and the second set of transmission configuration indicator states contain the M transmission configuration indicator states indicated by a single transmission configuration indicator codepoint.

In some embodiments, the first set of transmission configuration indicator states is associated with a first transmission and reception point and the second set of transmission configuration indicator states is associated with a second transmission and reception point.

In certain embodiments, the first set of transmission configuration indicator states and the second set of transmission configuration indicator states are indicated by a codepoint in downlink control information, and a number of transmission configuration indicator states is variable across a plurality of sets of transmission configuration indicator states.

According to the invention, the first set of transmission configuration indicator states and the second set of transmission configuration indicator states are indicated by a codepoint in downlink control information, the codepoint points to an index of an activated transmission configuration indicator table with at least one transmission configuration indicator state, and a plurality of consecutive neighboring indices of the index are implied as being indicated.

In various embodiments, a number of the plurality of consecutive neighboring indices is explicitly indicated or configured in an increasing order of indexing with respect to the index or a decreasing order of indexing with respect to the index.

In some embodiments, a number of the plurality of consecutive neighboring indices is implied as a remaining number of indices above the index or a remaining number of indices below the index.

In certain embodiments, multiple transmission configuration indicator states within a transmission configuration indicator set indicated by a transmission configuration indicator codepoint in downlink control information are associated with a single demodulation reference signal port.

In one embodiment, transmission occasions within a slot are in a spatial domain, a frequency domain, a time domain, or some combination thereof.

## Claims

1. A method performed by an apparatus and comprising:
receiving, from at least one network device, first information indicating a first set of multiple transmission configuration indicator states;
receiving, from the at least one network device, second information indicating a second set of multiple transmission configuration indicator states;
determining an association between the first set of transmission configuration indicator states and a first set of transmission occasions; and
determining an association between the second set of transmission configuration indicator states and a second set of transmission occasions,
wherein the first set of transmission configuration indicator states and the second set of transmission configuration indicator states are indicated by a codepoint in downlink control information, the codepoint points to an index of an activated transmission configuration indicator table with at least one transmission configuration indicator state, and **characterized in that** a plurality of consecutive neighboring indices of the index are implicitly indicated.

2. The method of claim 1, wherein the first set of transmission configuration indicator states is associated with a first transmission and reception point and the second set of transmission configuration indicator states is associated with a second transmission and reception point.

3. The method of claim 1, a number of transmission configuration indicator states is variable across a plurality of sets of transmission configuration indicator states.

4. The method of claim 1, wherein a number of the plurality of consecutive neighboring indices is explicitly indicated or configured in an increasing order of indexing with respect to the index or a decreasing order of indexing with respect to the index.

5. The method of claim 1, wherein a number of the plurality of consecutive neighboring indices is implied as a remaining number of indices above the index or a remaining number of indices below the index.

6. The method of claim 1, wherein multiple transmission configuration indicator states within a transmission configuration indicator set indicated by a transmission configuration indicator codepoint in downlink control information are associated with a single demodulation reference signal port.

7. The method of claim 1, wherein transmission occasions within a slot are in a spatial domain, a frequency domain, a time domain, or some combination thereof.

8. An apparatus comprising:
a receiver that is configured to:
receive, from at least one network device, first information indicating a first set of multiple transmission configuration indicator states; and
receive, from the at least one network device, second information indicating a second set of multiple transmission configuration indicator states; and
a processor that is configured to:
determine an association between the first set of transmission configuration indicator states and a first set of transmission occasions; and
determine an association between the second set of transmission configuration indicator states and a second set of transmission occasions,
wherein the first set of transmission configuration indicator states and the second set of transmission configuration indicator states are indicated by a codepoint in downlink control information, the codepoint points to an index of an activated transmission configuration indicator table with at least one transmission configuration indicator state, and **characterized in that** a plurality of consecutive neighboring indices of the index are implicitly indicated.

9. The apparatus of claim 8, wherein the first set of transmission configuration indicator states is associated with a first transmission and reception point and the second set of transmission configuration indicator states is associated with a second transmission and reception point.

10. The apparatus of claim 8, a number of transmission configuration indicator states is variable across a plurality of sets of transmission configuration indicator states.

11. The apparatus of claim 8, wherein a number of the plurality of consecutive neighboring indices is explicitly indicated or configured in an increasing order of indexing with respect to the index or a decreasing order of indexing with respect to the index.

12. The apparatus of claim 8, wherein a number of the plurality of consecutive neighboring indices is implied as a remaining number of indices above the index or a remaining number of indices below the index.

13. The apparatus of claim 8, wherein multiple transmission configuration indicator states within a transmission configuration indicator set indicated by a transmission configuration indicator codepoint in downlink control information are associated with a single demodulation reference signal port.

14. The apparatus of claim 8, wherein transmission occasions within a slot are in a spatial domain, a frequency domain, a time domain, or some combination thereof.

## Patentansprüche

1. Verfahren, das durch eine Einrichtung durchgeführt wird, umfassend:
Empfangen, von mindestens einer Netzwerkvorrichtung, von ersten Informationen, die einen ersten Satz von mehreren Übertragungskonfigurationsanzeigezuständen anzeigen;
Empfangen, von der mindestens einen Netzwerkvorrichtung, von zweiten Informationen, die einen zweiten Satz von mehreren Übertragungskonfigurationsanzeigezuständen anzeigen;
Bestimmen einer Zuordnung zwischen dem ersten Satz von Übertragungskonfigurationsanzeigezuständen und einem ersten Satz von Übertragungsgelegenheiten; und
Bestimmen einer Verbindung zwischen dem zweiten Satz von Übertragungskonfigurationsanzeigezuständen und einem zweiten Satz von Übertragungsgelegenheiten,
wobei der erste Satz von Übertragungskonfigurationsanzeigezuständen und der zweite Satz von Übertragungskonfigurationsanzeigezuständen durch einen Codepunkt in Downlink-Steuerinformationen angezeigt werden, der Codepunkt auf einen Index einer aktivierten Übertragungskonfigurationsanzeigetabelle mit mindestens einem Übertragungskonfigurationsanzeigezustand zeigt, und
**dadurch gekennzeichnet, dass** eine Vielzahl von aufeinanderfolgenden benachbarten Indizes des Index implizit angezeigt wird.

2. Verfahren nach Anspruch 1, wobei der erste Satz von Übertragungskonfigurationsanzeigezuständen einem ersten Übertragungs- und Empfangspunkt zugeordnet ist und der zweite Satz von Übertragungskonfigurationsanzeigezuständen einem zweiten Übertragungs- und Empfangspunkt zugeordnet ist.

3. Verfahren nach Anspruch 1,
eine Anzahl von Übertragungskonfigurationsanzeigezuständen über eine Vielzahl von Sätzen von Übertragungskonfigurationsanzeigezuständen variabel ist.

4. Verfahren nach Anspruch 1, wobei eine Anzahl der Vielzahl von aufeinanderfolgenden benachbarten Indizes explizit angezeigt oder in einer aufsteigenden Indizierungsreihenfolge in Bezug auf den Index oder einer absteigenden Indizierungsreihenfolge in Bezug auf den Index konfiguriert wird.

5. Verfahren nach Anspruch 1, wobei eine Anzahl der Vielzahl von aufeinanderfolgenden benachbarten Indizes als eine verbleibende Anzahl von Indizes über dem Index oder eine verbleibende Anzahl von Indizes unter dem Index impliziert wird.

6. Verfahren nach Anspruch 1, wobei mehrere Übertragungskonfigurationsanzeigezustände innerhalb eines Übertragungskonfigurationsanzeigesatzes, der durch einen Übertragungskonfigurationsanzeigecodepunkt in Downlink-Steuerinformationen angezeigt wird, einem einzigen Demodulationsreferenzsignalanschluss zugeordnet sind.

7. Verfahren nach Anspruch 1, wobei Übertragungsgelegenheiten innerhalb eines Schlitzes in einem Ortsbereich, einem Frequenzbereich, einem Zeitbereich oder einer Kombination davon liegen.

8. Vorrichtung, umfassend:
einen Empfänger, der konfiguriert ist zum:
Empfangen, von mindestens einer Netzwerkvorrichtung, von ersten Informationen, die einen ersten Satz von mehreren Übertragungskonfigurationsanzeigezuständen anzeigen; und
Empfangen, von der mindestens einen Netzwerkvorrichtung, von zweiten Informationen, die einen zweiten Satz von mehreren Übertragungskonfigurationsanzeigezuständen anzeigen; und
einen Prozessor, der konfiguriert ist zum:
Bestimmen einer Zuordnung zwischen dem ersten Satz von Übertragungskonfigurationsanzeigezuständen und einem ersten Satz von Übertragungsgelegenheiten; und
Bestimmen einer Zuordnung zwischen dem zweiten Satz von Übertragungskonfigurationsanzeigezuständen und einem zweiten Satz von Übertragungsgelegenheiten,
wobei der erste Satz von Übertragungskonfigurationsanzeigezuständen und der zweite Satz von Übertragungskonfigurationsanzeigezuständen durch einen Codepunkt in Downlink-Steuerinformationen angezeigt werden, der Codepunkt auf einen Index einer aktivierten Übertragungskonfigurationsanzeigetabelle mit mindestens einem Übertragungskonfigurationsanzeigezustand zeigt, und
**dadurch gekennzeichnet, dass** eine Vielzahl von aufeinanderfolgenden benachbarten Indizes des Index implizit angezeigt wird.

9. Einrichtung nach Anspruch 8, wobei der erste Satz von Übertragungskonfigurationsanzeigezuständen einem ersten Übertragungs- und Empfangspunkt zugeordnet ist und der zweite Satz von Übertragungskonfigurationsanzeigezuständen einem zweiten Übertragungs- und Empfangspunkt zugeordnet ist.

10. Einrichtung nach Anspruch 8,
eine Anzahl von Übertragungskonfigurationsanzeigezuständen über eine Vielzahl von Sätzen von Übertragungskonfigurationsanzeigezuständen variabel ist.

11. Einrichtung nach Anspruch 8, wobei eine Anzahl der Vielzahl von aufeinanderfolgenden benachbarten Indizes explizit angezeigt oder in einer aufsteigenden Indizierungsreihenfolge in Bezug auf den Index oder einer absteigenden Indizierungsreihenfolge in Bezug auf den Index konfiguriert ist.

12. Einrichtung nach Anspruch 8, wobei eine Anzahl der Vielzahl von aufeinanderfolgenden benachbarten Indizes als eine verbleibende Anzahl von Indizes über dem Index oder als eine verbleibende Anzahl von Indizes unter dem Index impliziert ist.

13. Einrichtung nach Anspruch 8, wobei mehrere Übertragungskonfigurationsanzeigezustände innerhalb eines Übertragungskonfigurationsanzeigesatzes, der durch einen Übertragungskonfigurationsanzeigecodepunkt in Downlink-Steuerinformationen angezeigt wird, einem einzigen Demodulationsreferenzsignalanschluss zugeordnet sind.

14. Einrichtung nach Anspruch 8, wobei Übertragungsgelegenheiten innerhalb eines Schlitzes in einem Ortsbereich, einem Frequenzbereich, einem Zeitbereich oder einer Kombination davon liegen.

## Revendications

1. Procédé mis en œuvre par un appareil et comprenant :
la réception, en provenance d'au moins un dispositif réseau, de premières informations indiquant un premier ensemble de multiples états d'indicateur de configuration de transmission ;
la réception, en provenance de l'au moins un dispositif réseau, de secondes informations indiquant un second ensemble de multiples états d'indicateur de configuration de transmission ;
la détermination d'une association entre le premier ensemble d'états d'indicateur de configuration de transmission et un premier ensemble d'occasions de transmission ; et
la détermination d'une association entre le second ensemble d'états d'indicateur de configuration de transmission et un second ensemble d'occasions de transmission,
dans lequel le premier ensemble d'états d'indicateur de configuration de transmission et le second ensemble d'états d'indicateur de configuration de transmission sont indiqués par un point de code dans des informations de commande de liaison descendante, le point de code pointe vers un indice d'une table d'indicateurs de configuration de transmission activés avec au moins un état d'indicateur de configuration de transmission, et **caractérisé en ce qu'**une pluralité d'indices voisins consécutifs de l'indice sont indiqués implicitement.

2. Procédé selon la revendication 1, dans lequel le premier ensemble d'états d'indicateur de configuration de transmission est associé à un premier point de transmission et de réception et le second ensemble d'états d'indicateur de configuration de transmission est associé à un second point de transmission et de réception.

3. Procédé selon la revendication 1,
un nombre d'états d'indicateur de configuration de transmission est variable à travers une pluralité d'ensembles d'états d'indicateur de configuration de transmission.

4. Procédé selon la revendication 1, dans lequel un nombre de la pluralité d'indices voisins consécutifs est indiqué explicitement ou configuré par ordre croissant d'indexage par rapport à l'indice ou un ordre décroissant d'indexage par rapport à l'indice.

5. Procédé selon la revendication 1, dans lequel un nombre de la pluralité d'indices voisins consécutifs est implicite en tant que nombre restant d'indices au-dessus de l'indice ou nombre restant d'indices en dessous de l'indice.

6. Procédé selon la revendication 1, dans lequel de multiples états d'indicateur de configuration de transmission au sein d'un ensemble d'indicateurs de configuration de transmission indiqué par un point de code d'indicateur de configuration de transmission dans des informations de commande de liaison descendante sont associés à un unique port de signal de référence de démodulation.

7. Procédé selon la revendication 1, dans lequel des occasions de transmission au sein d'un créneau sont dans un domaine spatial, un domaine fréquentiel, un domaine temporel, ou une certaine combinaison de ceux-ci.

8. Appareil comprenant :
un récepteur qui est configuré pour :
recevoir, en provenance d'au moins un dispositif réseau, des premières informations indiquant un premier ensemble de multiples états d'indicateur de configuration de transmission ; et
recevoir, en provenance de l'au moins un dispositif réseau, des secondes informations indiquant un second ensemble de multiples états d'indicateur de configuration de transmission ; et
un processeur qui est configuré pour :
déterminer une association entre le premier ensemble d'états d'indicateur de configuration de transmission et un premier ensemble d'occasions de transmission ; et
déterminer une association entre le second ensemble d'états d'indicateur de configuration de transmission et un second ensemble d'occasions de transmission,
dans lequel le premier ensemble d'états d'indicateur de configuration de transmission et le second ensemble d'états d'indicateur de configuration de transmission sont indiqués par un point de code dans des informations de commande de liaison descendante, le point de code pointe vers un indice d'une table d'indicateurs de configuration de transmission activés avec au moins un état d'indicateur de configuration de transmission, et **caractérisé en ce qu'**une pluralité d'indices voisins consécutifs de l'indice sont indiqués implicitement.

9. Appareil selon la revendication 8, dans lequel le premier ensemble d'états d'indicateur de configuration de transmission est associé à un premier point de transmission et de réception et le second ensemble d'états d'indicateur de configuration de transmission est associé à un second point de transmission et de réception.

10. Appareil selon la revendication 8,
un nombre d'états d'indicateur de configuration de transmission est variable à travers une pluralité d'ensembles d'états d'indicateur de configuration de transmission.

11. Appareil selon la revendication 8, dans lequel un nombre de la pluralité d'indices voisins consécutifs est indiqué explicitement ou configuré par ordre croissant d'indexage par rapport à l'indice ou un ordre décroissant d'indexage par rapport à l'indice.

12. Appareil selon la revendication 8, dans lequel un nombre de la pluralité d'indices voisins consécutifs est implicite en tant que nombre restant d'indices au-dessus de l'indice ou nombre restant d'indices en dessous de l'indice.

13. Appareil selon la revendication 8, dans lequel de multiples états d'indicateur de configuration de transmission au sein d'un ensemble d'indicateurs de configuration de transmission indiqué par un point de code d'indicateur de configuration de transmission dans des informations de commande de liaison descendante sont associés à un unique port de signal de référence de démodulation.

14. Appareil selon la revendication 8, dans lequel des occasions de transmission au sein d'un créneau sont dans un domaine spatial, un domaine fréquentiel, un domaine temporel, ou une certaine combinaison de ceux-ci.
